# EUROPEAN PATENT APPLICATION

(11) **EP 2 851 770 A1**
(43) Date of publication of application: **25.03.2015**
(21) Application number: 12889790.7
(22) Date of filing: 14.12.2012
(51) Int. Cl.: G06F 3/048

(54) **METHOD, APPARATUS AND DEVICE FOR PRESENTING MENU**

(71) Applicant: Huawei Technologies Co., Ltd., Longgang District Shenzhen, Guangdong 518129 (CN)
(72) Inventor: LIANG, Jun, Shenzhen Guangdong 518129 (CN); GAO, Jian, Shenzhen Guangdong 518129 (CN); CHEN, Gang, Shenzhen Guangdong 518129 (CN)
(74) Representative: Körber, Martin Hans
(86) International application number: PCT/CN2012/086662
(87) International publication number: WO 2014/089826

(57) **Abstract**

The present invention discloses a menu showing method, apparatus, and device, and relates to the field of user interface technologies. The method includes: dividing a menu system into multiple menu groups according to functional characteristic, and determining menu group loaded information, where the menu group loaded information includes a location sequence in which each of the menu groups is displayed; determining a display mode of each menu group in the multiple menu groups according to the location sequence in which each of the menu groups is displayed in the menu group loaded information; and displaying each menu group on a current interface according to the menu group loaded information and the display mode of each menu group. The present invention solves a problem in the prior art that a menu architecture is complex, unclear, and has a high requirement for a user, simplifies the menu architecture of a software system, makes menu navigation clear and visible on a display interface, so that the user can use menus of the software system in an easier and more graphical way.

## Description

### TECHNICAL FIELD

The present invention relates to the field of user interface technologies, and in particular, to a menu showing method, apparatus, and device.

### BACKGROUND

As software functions grow in number and use frequency, a higher requirement is raised for a menu of software.

Currently, a method for showing the software functions by using the menu is that: a main menu is used, where the main menu includes multiple level-2 menus, each level-2 menu possibly further includes multiple level-3 menus, and a lowest-level menu corresponds to a function; and when using the software, a user needs to navigate through the complex menus level by level to find a corresponding function, so as to complete an operation.

During implementation of the present invention, the inventor discovers that the prior art has at least the following problems:

The prior art constructs a menu architecture of a software system in a manner in which the main menu provides hierarchical drop-down menus. The user needs to remember a correspondence between a specific menu and a function to find the corresponding function, and the menu architecture is complex, unclear, and has a high requirement for the user.

### SUMMARY

To solve the problems in the prior art, embodiments of the present invention provide a menu showing method, apparatus, and device. The technical solutions are as follows:

According to a first aspect, an embodiment of the present invention provides a menu showing method, where the method includes:
dividing a menu system into multiple menu groups according to functional characteristic, and determining menu group loaded information, where the menu group loaded information includes a location sequence in which each of the menu groups is displayed;
determining a display mode of each menu group in the multiple menu groups according to the location sequence in which each of the menu groups is displayed in the menu group loaded information; and
displaying each menu group on a current interface according to the menu group loaded information and the display mode of each menu group.

In a first possible implementation manner of the first aspect, the display mode of the menu group at least includes one display element of a content presentation form and a display location sequence of the menu group; and
correspondingly, the displaying each menu group on a current interface according to the menu group loaded information and the display mode of each menu group specifically includes:
displaying each menu group on the current interface according to the menu group loaded information and one display element of the content presentation form or the display location sequence of the menu group.

With reference to the first possible implementation manner of the first aspect, in a second possible implementation manner of the first aspect, the display location sequence of the menu group is a sequence arranged in parallel and from far to near in vision;
correspondingly, the displaying each menu group on the current interface according to the menu group loaded information and the display location sequence specifically includes:
displaying each menu group on the current interface according to the menu group loaded information in a way of the sequence arranged in parallel and from far to near in vision.

With reference to the first possible implementation manner of the first aspect, in a third possible implementation manner of the first aspect, the content presentation form of the menu group is folded pages that are placed vertically and bended continuously in vision;
correspondingly, the displaying each menu group on the current interface according to the menu group loaded information and the content presentation form of the menu group specifically includes:
displaying each menu group on the current interface according to the menu group loaded information in a way of the folded pages that are placed vertically and bended continuously in vision.

With reference to the first aspect, or with reference to the first aspect and any one or more implementation manners of the first to the third possible implementation manners that are formed based on the first aspect, in a fourth possible implementation manner, the method further includes:
receiving a selection instruction of a user for a menu group in the displayed multiple menu groups;
determining whether the menu group selected according to the selection instruction is a currently activated menu group, where the currently activated menu group is a menu group that is displayed at the forefront of the current interface; and
when the menu group selected according to the selection instruction is not the currently activated menu group, switching the menu group selected according to the selection instruction to the currently activated menu group and displaying the menu group on the current interface.

With reference to the first aspect, or with reference to the first aspect and any one or more implementation manners of the first to the fourth possible implementation manners that are formed based on the first aspect, in a fifth possible implementation manner, the method further includes:
receiving a selection instruction of the user for a menu in the currently activated menu group; and
displaying, on the current interface, details about the menu selected according to the selection instruction.

With reference to the first aspect, or with reference to the first aspect and any one or more implementation manners of the first to the fifth possible implementation manners that are formed based on the first aspect, in a sixth possible implementation manner, the method further includes:
receiving a return instruction of the user for the menu whose details are displayed on the current interface; and
taking back the details about the menu according to the return instruction, and displaying summary information of the menu on the current interface.

With reference to the first aspect, or with reference to the first aspect and any one or more implementation manners of the first to the sixth possible implementation manners that are formed based on the first aspect, in a seventh possible implementation manner, after the displaying each menu group on a current interface according to the menu group loaded information and the display mode of each menu group, the method further includes:
receiving latest menu picture data that is periodically sent by a background server; and
rendering and updating, according to the received latest menu picture data, a menu picture that is displayed on the current interface, and displaying the updated menu picture on the current interface.

According to a second aspect, an embodiment of the present invention provides a menu showing apparatus, where the apparatus includes:
a menu controller, configured to divide a menu system into multiple menu groups according to functional characteristic, and determine menu group loaded information, where the menu group loaded information includes a location sequence in which each of the menu groups is displayed; and determine a display mode of each menu group in the multiple menu groups according to the location sequence in which each of the menu groups is displayed in the menu group loaded information;
an interface message manager, configured to obtain, on a current interface, operating instructions of a user for the menu groups divided by the menu controller and for a menu in the menu groups; and
a menu group display module, including the multiple menu groups divided by the menu controller, and configured to display each menu group on the current interface according to the menu group loaded information and the display mode of each menu group.

In a first possible implementation manner of the second aspect, the menu group display module is specifically configured to: when the display mode of the menu at least group includes one display element of a content presentation form and a display location sequence of the menu group, display each menu group on the current interface according to the menu group loaded information and one display element of the content presentation form or the display location sequence of the menu group.

With reference to the first possible implementation manner of the second aspect, in a second possible implementation manner of the second aspect, the menu group display module includes:
a first display unit, configured to: when the display location sequence of the menu group is a sequence arranged in parallel and from far to near in vision, display each menu group on the current interface according to the menu group loaded information in a way of the sequence arranged in parallel and from far to near in vision.

With reference to the second possible implementation manner of the second aspect, in a third possible implementation manner of the second aspect, the menu group display module includes:
a second display unit, configured to: when the content presentation form of the menu group is folded pages that are placed vertically and bended continuously in vision, display each menu group on the current interface according to the menu group loaded information in a way of the folded pages that are placed vertically and bended continuously in vision in vision.

With reference to the second aspect, or with reference to the second aspect and any one or more implementation manners of the first to the third possible implementation manners that are formed based on the second aspect, in a fourth possible implementation manner, the interface message manager is further configured to receive a selection instruction of the user for a menu group in the displayed multiple menu groups;
the menu controller is further configured to determine whether the menu group selected according to the selection instruction is a currently activated menu group, where the currently activated menu group is a menu group that is displayed at the forefront of the current interface; and when the menu group selected according to the selection instruction is not the currently activated menu group, determine to switch the menu group selected according to the selection instruction to the currently activated menu group; and
the menu group display module is further configured to: according to the display mode of the menus, switch the menu group selected according to the selection instruction to the currently activated menu group and display the menu group on the current interface.

With reference to the second aspect, or with reference to the second aspect and any one or more implementation manners of the first to the fourth possible implementation manners that are formed based on the second aspect, in a fifth possible implementation manner of the second aspect, the interface message manager is further configured to receive a selection instruction of the user for a menu in the currently activated menu group;
the menu controller is further configured to: according to the selection instruction for the menu received by the interface message manager, determine to display, on the current interface, details about the menu selected according to the selection instruction; and
the menu group display module is further configured to display, on the current interface, the details about the menu selected according to the selection instruction.

With reference to the second aspect, or with reference to the second aspect and any one or more implementation manners of the first to the fifth possible implementation manners that are formed based on the second aspect, in a sixth possible implementation manner of the second aspect, the interface message manager is further configured to receive a return instruction of the user for the menu whose details are displayed on the current interface;
the menu controller is further configured to determine to take back the details about the menu according to the return instruction received by the interface message manager, and display summary information of the menu on the current interface; and
the menu group display module is further configured to take back the details about the menu and display the summary information of the menu on the current interface.

With reference to the second aspect, or with reference to the second aspect and any one or more implementation manners of the first to the fourth possible implementation manners that are formed based on the second aspect, in a seventh possible implementation manner of the second aspect, the interface message manager is further configured to receive latest menu picture data that is periodically sent by a background server;
the menu controller is further configured to render and update, according to the latest menu picture data that is received by the interface message manager, a menu picture that is displayed on the current interface; and
the menu group display module is further configured to display, on the current interface, the menu picture that is updated by the menu controller.

According to a third aspect, an embodiment of the present invention provide a menu showing device, where the apparatus includes: a memory, configured to store running data of functional modules;
a processor, configured to be coupled to the memory, where the processor is configured to execute the menu showing method described according to the first aspect and one or more implementation manners of the first to the seventh possible implementation manners that are formed based on the first aspect; and
a transceiver, configured to be coupled with the processor, and receive and send various data processed by the processor.

The beneficial effects of the technical solutions provided by the embodiments of the present invention are as follows:

A menu system is divided into multiple menu groups according to functional characteristic, and menu group loaded information is determined; a display mode of each menu group in the multiple menu groups is determined according to a location sequence in which each menu group is displayed in the menu group loaded information; and each menu group is displayed on a current interface according to the menu group loaded information and the display mode of each menu group. In this way, a problem in the prior art that a menu architecture is complex, unclear, and has a high requirement for a user is solved, thereby simplifying the menu architecture of a software system and making menu navigation clear and visible on a display interface, so that the user can use menus of the software system in an easier and more graphical way.

### BRIEF DESCRIPTION OF DRAWINGS

To describe technical solutions in embodiments of the present invention more clearly, the following briefly introduces accompanying drawings required for describing the embodiments. Apparently, the accompanying drawings in the following description show merely some embodiments of the present invention, and a person of ordinary skill in the art may still derive other drawings from these accompanying drawings without creative efforts.
FIG. 1 is a flowchart of a menu showing method according to Embodiment 1 of the present invention;
FIG. 2 is a flowchart of a menu showing method according to Embodiment 2 of the present invention;
FIG. 3 is a first schematic operation diagram of a menu showing method according to Embodiment 2 of the present invention;
FIG. 4 is a second schematic operation diagram of a menu showing method according to Embodiment 2 of the present invention;
FIG. 5 is a third schematic operation diagram of a menu showing method according to Embodiment 2 of the present invention;
FIG. 6 is a fourth schematic operation diagram of a menu showing method according to Embodiment 2 of the present invention;
FIG. 7 is a fifth schematic operation diagram of a menu showing method according to Embodiment 2 of the present invention;
FIG. 8 is a sixth schematic operation diagram of a menu showing method according to Embodiment 2 of the present invention;
FIG. 9 is a schematic structural diagram of a menu showing apparatus according to Embodiment 3 of the present invention; and
FIG. 10 is a schematic structural diagram of a menu showing device according to Embodiment 4 of the present invention.

### DESCRIPTION OF EMBODIMENTS

To make the objectives, technical solutions, and advantages of the present invention clearer, the following further describes the embodiments of the present invention in detail with reference to accompanying drawings.

### Embodiment 1

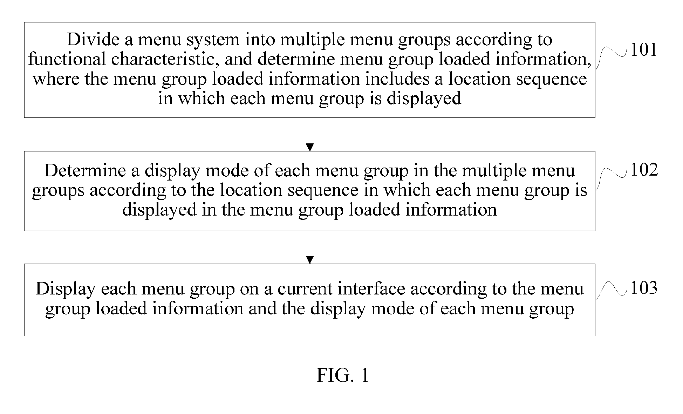

Referring to FIG. 1, an embodiment of the present invention provides a menu showing method, where the method includes:
101: Divide a menu system into multiple menu groups according to functional characteristic, and determine menu group loaded information, where the menu group loaded information includes a location sequence in which each menu group is displayed.
102: Determine a display mode of each menu group in the multiple menu groups according to the location sequence in which each menu group is displayed in the menu group loaded information.
103: Display each menu group on a current interface according to the menu group loaded information and the display mode of each menu group.

Specifically, the display mode of the menu group at least includes one display element of a content presentation form and a display location sequence of the menu group; and
correspondingly, the displaying each menu group on a current interface according to the menu group loaded information and the display mode of each menu group specifically includes:
displaying each menu group on the current interface according to the menu group loaded information and one display element of the content presentation form or the display location sequence of the menu group.

Further, the display location sequence of the menu group is a sequence arranged in parallel and from far to near in vision; and
correspondingly, the displaying each menu group on the current interface according to the menu group loaded information and the display location sequence specifically includes:
displaying each menu group on the current interface according to the menu group loaded information in a way of the sequence arranged in parallel and from far to near in vision.

Further, the content presentation form of the menu group is folded pages that are placed vertically and bended continuously in vision; and
correspondingly, the displaying each menu group on the current interface according to the menu group loaded information and the content presentation form of the menu group specifically includes:
displaying each menu group on the current interface according to the menu group loaded information in a way of the folded pages that are placed vertically and bended continuously in vision in vision.

Correspondingly, when each menu group includes multiple menus, each menu corresponds to one folded page in the folded pages.

Specifically, the method further includes:
receiving a selection instruction of a user for a menu group in the displayed multiple menu groups;
determining whether the menu group selected according to the selection instruction is a currently activated menu group, where the currently activated menu group is a menu group that is displayed at the forefront of the current interface; and
when the menu group selected according to the selection instruction is not the currently activated menu group, switching the menu group selected according to the selection instruction to the currently activated menu group and displaying the menu group on the current interface.

Specifically, the method further includes:
receiving a selection instruction of the user for a menu in the currently activated menu group; and
displaying, on the current interface, details about the menu selected according to the selection instruction.

Further, the method further includes:
receiving a return instruction of the user for the menu whose details are displayed on the current interface; and
taking back the details about the menu according to the return instruction, and displaying summary information of the menu on the current interface.

Specifically, after the displaying each menu group on a current interface according to the menu group loaded information and the display mode of each menu group, the method further includes:
receiving latest menu picture data that is periodically sent by a background server; and
rendering and updating, according to the received latest menu picture data, a menu picture that is displayed on the current interface, and displaying the updated menu picture on the current interface.

The method provided by the embodiment of the present invention divides a menu system into multiple menu groups according to functional characteristic, and determines menu group loaded information; determines a display mode of each menu group in the multiple menu groups according to a location sequence in which each menu group is displayed in the menu group loaded information; and displays each menu group on a current interface according to the menu group loaded information and the display mode of each menu group. In this way, a problem in the prior art that a menu architecture is complex, unclear, and has a high requirement for a user is solved, thereby simplifying the menu architecture of a software system and making menu navigation clear and visible on a display interface, so that the user can use menus of the software system in an easier and more graphical way.

### Embodiment 2

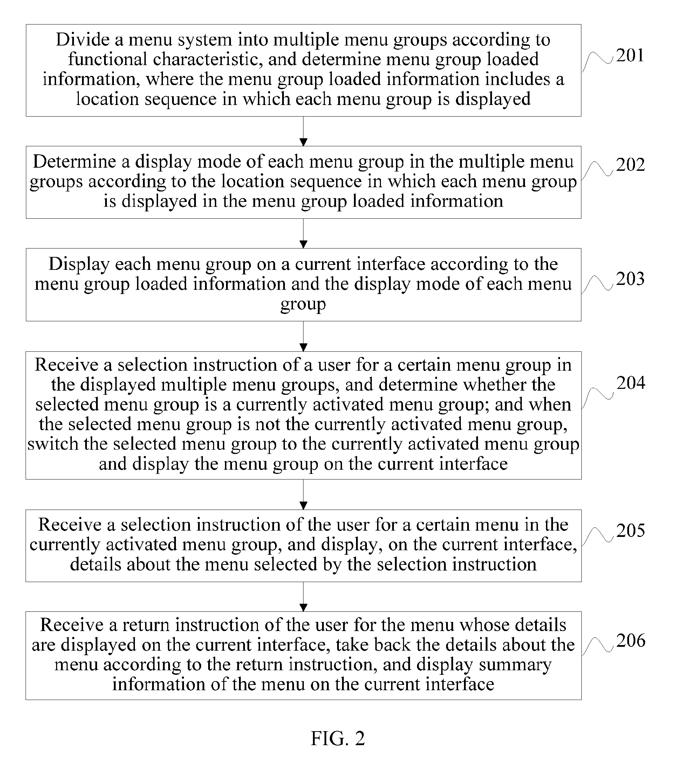

Referring to FIG. 2, an embodiment of the present invention provides a menu showing method, where the method includes:
201: Divide a menu system into multiple menu groups according to functional characteristic, and determine menu group loaded information, where the menu group loaded information includes a location sequence in which each menu group is displayed.

The embodiment of the present invention is completed by an apparatus that is formed of three parts: a menu controller, an interface message manager, and a menu group display module, where the menu controller is in charge of managing a menu, and controlling a behavior, such as arraying or hiding the menu group in the menu group display module according to a message obtained by the interface message manager; the interface message manager is in charge of obtaining a message of a current interface, and sending the message to the menu controller; and the menu group display module includes all menu groups in the menu system, and is in charge of showing all menu groups and menus in each menu group according to a command of the menu controller.

Specifically, the menu system of software is divided into the multiple menu groups according to the functional characteristic of the software, where each menu group corresponds to a function, for example, a monitoring function corresponds to a monitoring menu group, and a maintenance function corresponds to a maintenance menu group; and after the menu system is divided into the menu groups, the menu controller determines the menu group loaded information according to the menu groups obtained after the division and function information corresponding to each menu group, where the menu group loaded information includes the location sequence in which each menu group is displayed.
202: Determine a display mode of each menu group in the multiple menu groups according to the location sequence in which each menu group is displayed in the menu group loaded information.

Specifically, the display mode of the menu group includes at least display content, a content presentation form, a display location sequence of the menu group, and a connection relationship between the menu group and a neighboring menu group; for example, loaded information of the monitoring menu group is that: the location sequence in which the monitoring menu group is displayed is 1, the display form is a folding fan form, the display content is summary information, and a display size is 16*32.
203: Display each menu group on a current interface according to the menu group loaded information and the display mode of each menu group.

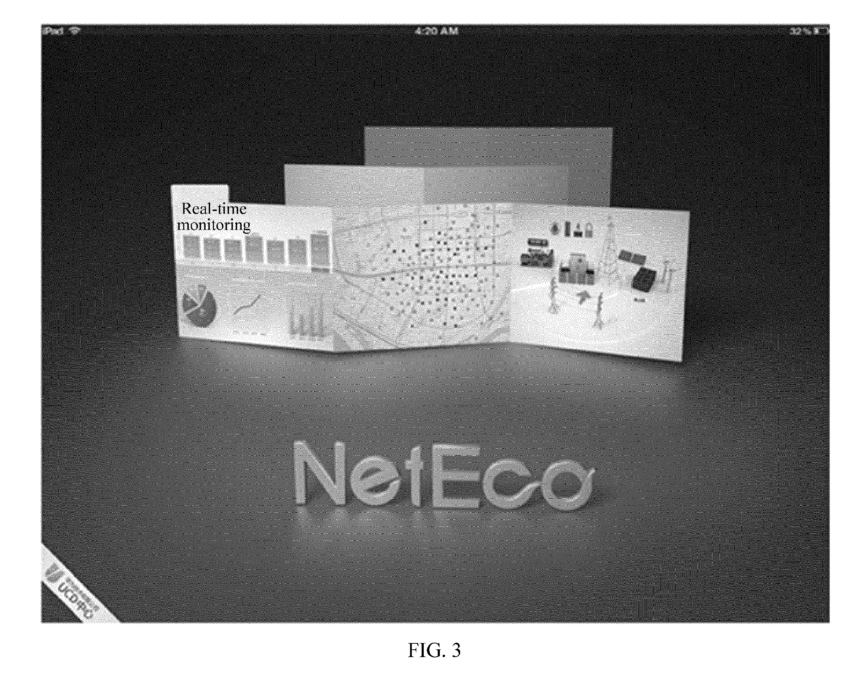

Specifically, the multiple menu groups are displayed on the current interface according to the display mode of the menu group that is determined in step 202 and may include the display content, the content presentation form, and the display location sequence of the menu group, and the connection relationship between the menu group and the neighboring menu group. Referring to FIG. 3, when the software system loads the menu group, the menu group display module first loads and displays each menu group according to the display sequence, the display form, the display location, and the display size of each menu group in menu loaded information determined by the menu controller; and as shown in FIG. 3, a display sequence of a real-time monitoring menu group is the forefront, the display form is a paper fan form, the display location is the center, and the display size is 20*8.

The display mode of the menu group at least includes one display element of the content presentation form and the display location sequence of the menu group; and
correspondingly, the displaying each menu group on a current interface according to the menu group loaded information and the display mode of each menu group specifically includes:
displaying each menu group on the current interface according to the menu group loaded information and one display element of the content presentation form or the display location sequence of the menu group.

Further, the display location sequence of the menu group is a sequence arranged in parallel and from far to near in vision; and
correspondingly, the displaying each menu group on the current interface according to the menu group loaded information and the display location sequence specifically includes:
displaying each menu group on the current interface according to the menu group loaded information in a way of the sequence arranged in parallel and from far to near in vision.

Further, the content presentation form of the menu group is folded pages that are placed vertically and bended continuously in vision; and
correspondingly, the displaying each menu group on the current interface according to the menu group loaded information and the content presentation form of the menu group specifically includes:
displaying each menu group on the current interface according to the menu group loaded information in a way of the folded pages that are placed vertically and bended continuously in vision in vision.

Further, the content presentation form of the menu group is folded pages that are placed vertically and bended continuously in vision; and
correspondingly, when each menu group includes multiple menus, each menu corresponds to one folded page in the folded pages.

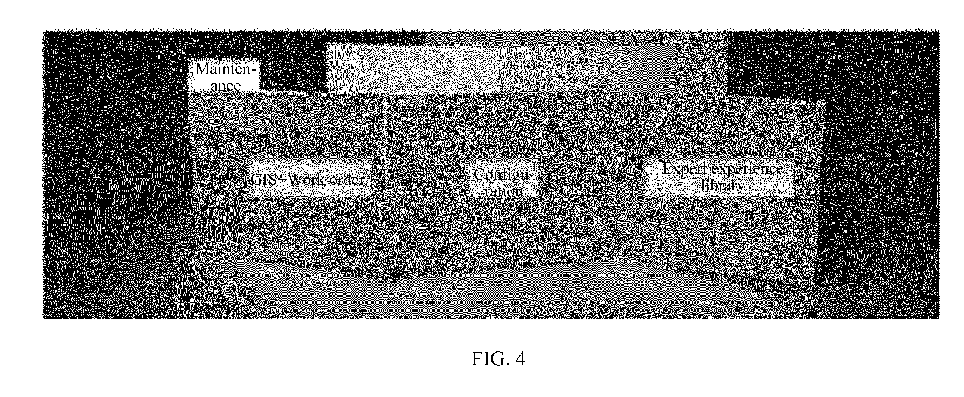

The multiple menus in each menu group need to be displayed at the same time when the menu group is displayed, which is specifically as follows:
a. Menu loaded information of each menu group is determined according to a correlation between the multiple menus that are included in each menu group.
   Specifically, the menu controller determines the menu loaded information according to the correlation between the multiple menus that are included in each menu group, where the menu loaded information includes a location sequence in which each menu included in each menu group is displayed; and the correlation between the multiple menus includes an sequence of processing the multiple menus, or another correspondence. Referring to FIG. 4, three menus in the maintenance menu group are respectively: a work order and GIS geographical information, site configuration details, and maintenance experience; and the three menus are arranged in a task execution sequence, and therefore they are arranged from left to right.
b. A display mode of each menu in the multiple menus is determined according to a location sequence in which each menu is displayed in the menu loaded information of each menu group, where the display mode of the menu includes at least display content, a content presentation form, a display location sequence of the menu, and a connection relationship between the menu and a neighboring menu.
c. Content of the multiple menus that are included in each menu group is displayed on the current interface according to the display mode of the menu.

Referring to FIG. 4, the menu group display module correctly displays the menus at the same time according to the determined display mode of the menu, for example, the display sequence, the display location, and the display size; as shown in FIG. 4, the maintenance menu group respectively displays the three menus one after another: the work order and GIS geographical information, the site configuration details, and the maintenance experience; and after all menu groups are loaded and displayed, the menu system enters a state of waiting for a message, and the interface message manager monitors an operation of a user on the current interface, so as to obtain an operation message of the user.

It should be noted that, after the menu group display module displays all menu groups according to the display mode of the menu group and displays the multiple menus according to the display mode of the menu on the current interface, the menu group display module further receives latest menu picture data periodically sent by a background server, and renders and updates, according to the received latest menu picture data, menu pictures that are displayed on the current interface, and displays the updated menu pictures on the current interface.
204: Receive a selection instruction of the user for a menu group in the displayed multiple menu groups, and determine whether the selected menu group is a currently activated menu group; and when the selected menu group is not the currently activated menu group, switch the selected menu group to the currently activated menu group and display the menu group on the current interface.

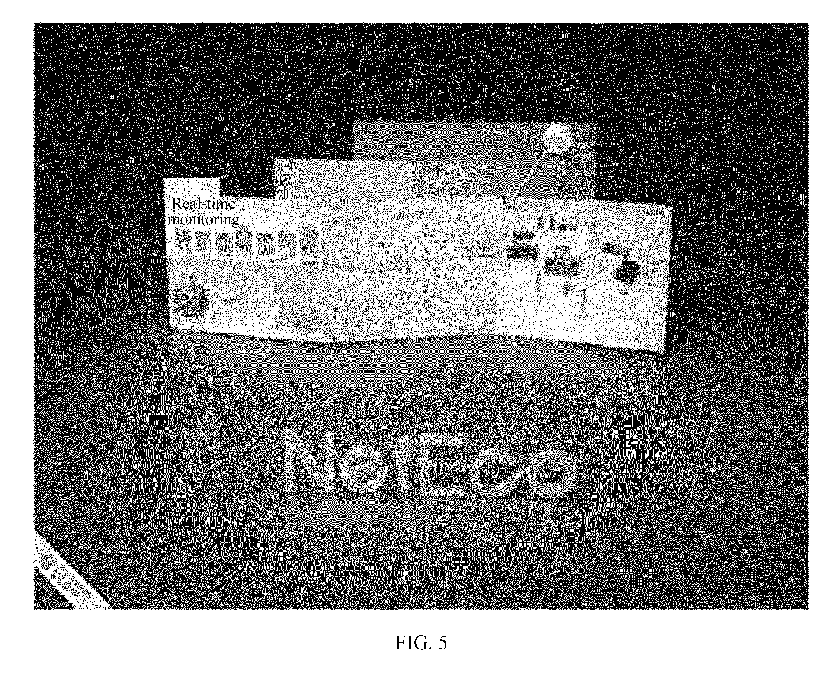

Specifically, the currently activated menu group is a menu group that is displayed at the forefront of the current interface; referring to FIG. 5, when the user clicks the real-time monitoring menu group on the current interface, the interface message manager obtains a selection instruction of the user for the real-time monitoring menu group, and sends the selection instruction to the menu controller; the menu controller determines whether the real-time monitoring menu group is the currently activated menu group; and when determining that the real-time monitoring menu group is not the currently activated menu group, the menu controller switches the real-time monitoring menu group to the currently activated menu group according to a preset menu switching algorithm.

The menu switching algorithm may be exchanged switching, which may specifically be that, a switching command is sent to the menu group display module, and after receiving the switching command, the menu group display module separately moves two menu groups to new positions, so that the menu group selected according to the selection instruction is dragged to the forefront of the current interface, to become the currently activated menu group. In addition, the menu switching algorithm may also be sequential switching, that is, the menu group selected according to the selection instruction is switched to the currently activated menu group, and the menu group displayed at the forefront of the current interface is moved backward till the menu group is behind the menu group selected according to the selection instruction, and other menu groups are sequentially moved backward.
205: Receive a selection instruction of the user for a menu in the currently activated menu group, and display, on the current interface, details about the menu selected according to the selection instruction.

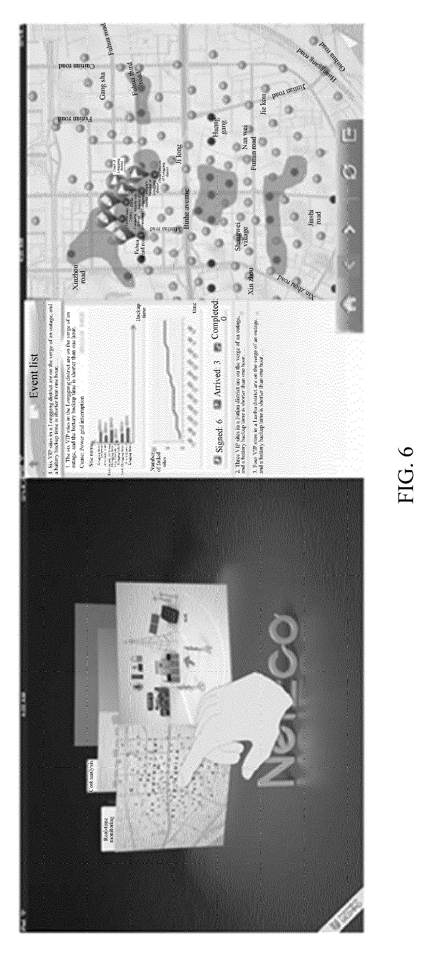

Specifically, referring to FIG. 6, when the user clicks a site distribution menu in the real-time monitoring menu group on the current interface, the interface message manager obtains a message for the site distribution menu, and the interface message manager sends a selection instruction for the site distribution menu to the menu controller; after receiving the selection instruction for the site distribution menu, the menu controller sends, to the menu group display module, a command of displaying details about the site distribution menu on the current interface; and after receiving the command, the menu group display module displays details about a picture of the site distribution menu in the real-time monitoring menu group on the current interface progressively from the current size.
206: Receive a return instruction of the user for the menu whose details are displayed on the current interface, take back the details about the menu according to the return instruction, and display summary information of the menu on the current interface.

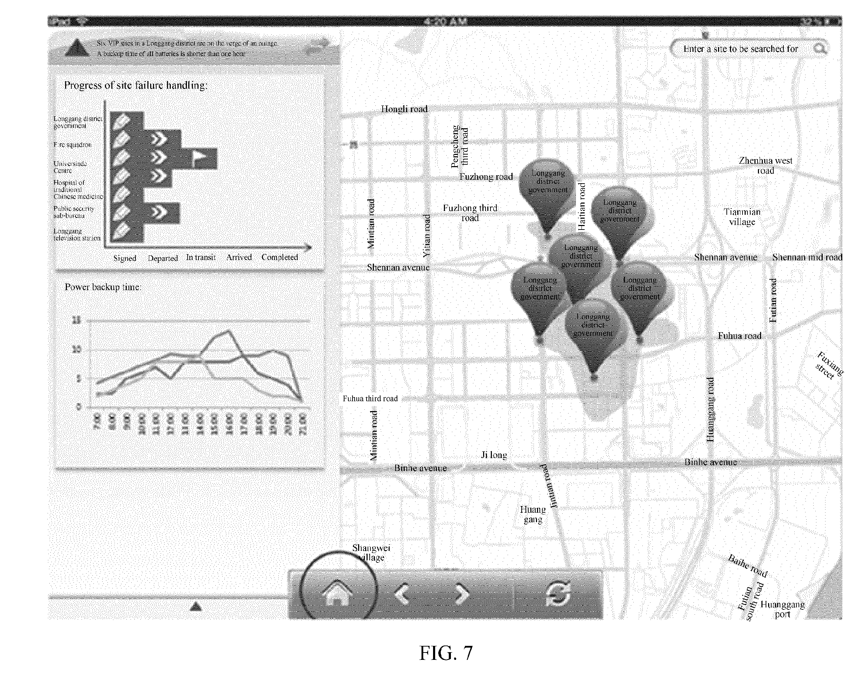

Specifically, referring to FIG. 7, when the user clicks a homepage icon on the toolbar on the current interface, the interface message manager obtains a return instruction for the currently displayed site distribution menu, and sends the return instruction to the menu controller; after receiving the return instruction, the menu controller sends, to the menu group display module, a command of taking back the details about the site distribution menu; after receiving the command, the menu group display module takes back the details about the site distribution menu that are displayed on a current page, and displays the summary information of the menu on the current interface.

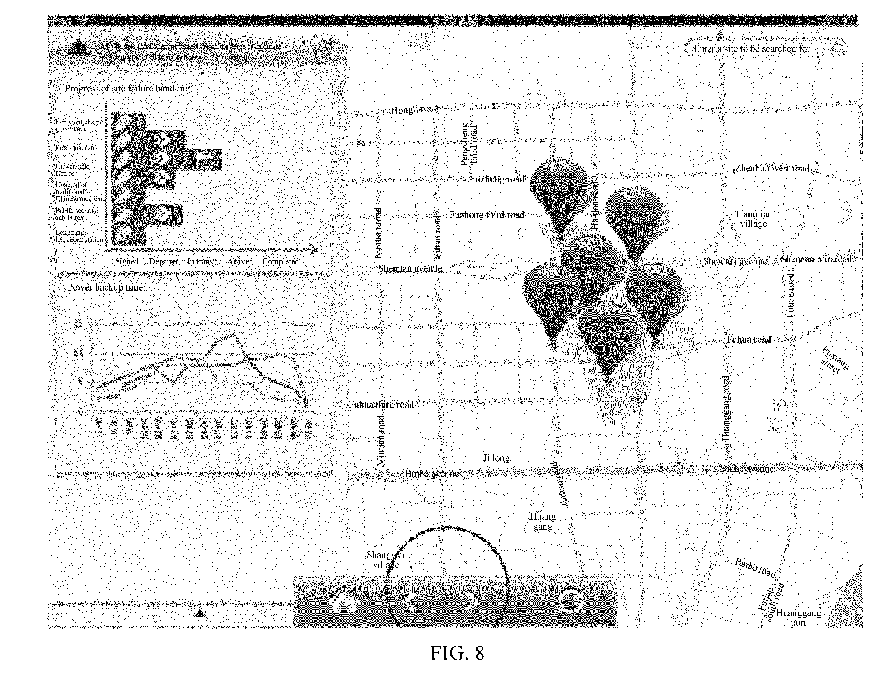

It should be noted that, when an instruction, of the user, for switching a current menu to a neighboring menu is obtained, the current menu is switched to the selected neighboring menu on the current interface, and details about the selected neighboring menu are displayed on the current interface, where the neighboring menu may be a menu previous to or next to the current menu. Referring to FIG. 8, when the user clicks a slide-left icon or a slide-right icon, after obtaining the switching instruction, the interface message manager sends the switching instruction to the menu controller; after receiving the switching instruction, the menu controller sends the switching instruction to the menu group display module; and the menu group display module switches the currently displayed site distribution menu to the selected neighboring menu, and may also switch the current page to the selected neighboring menu by sliding upwards or downwards.

The method provided by the embodiment of the present invention divides a menu system into multiple menu groups according to functional characteristic, and determines menu group loaded information; determines a display mode of each menu group in the multiple menu groups according to a location sequence in which each menu group is displayed in the menu group loaded information; and displays each menu group on a current interface according to the menu group loaded information and the display mode of each menu group. In this way, a problem in the prior art that a menu architecture is complex, unclear, and has a high requirement for a user is solved, thereby simplifying the menu architecture of a software system and making menu navigation clear and visible on a display interface, so that the user can use menus of the software system in an easier and more graphical way.

### Embodiment 3

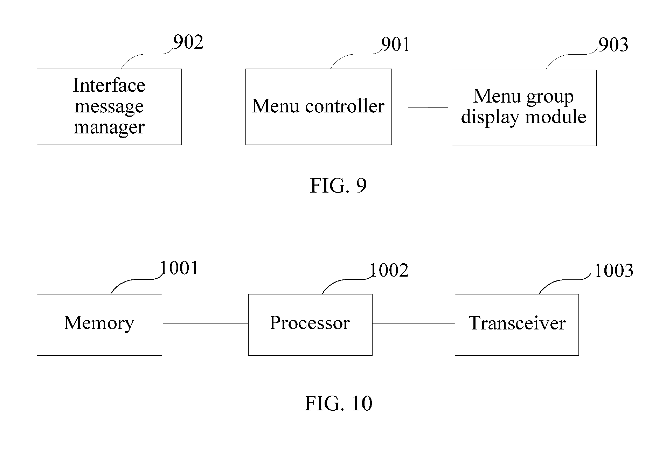

Referring to FIG. 9, an embodiment of the present invention provides a menu showing apparatus, where the apparatus includes:
a menu controller 901, configured to divide a menu system into multiple menu groups according to functional characteristic, and determine menu group loaded information, where the menu group loaded information includes a location sequence in which each of the menu groups is displayed; and determine a display mode of each menu group in the multiple menu groups according to the location sequence in which each menu group is displayed in the menu group loaded information;
an interface message manager 902, configured to obtain, on a current interface, operating instructions of a user for the menu groups divided by the menu controller 901 and for a menu in the menu groups; and
a menu group display module 903, including the multiple menu groups divided by the menu controller 901, and configured to display each menu group on the current interface according to the menu group loaded information and the display mode of each menu group.

Specifically, the menu group display module 903

The menu group display module 903 is specifically configured to: when the display mode of the menu group at least includes one display element of a content presentation form and a display location sequence of the menu group, display each menu group on the current interface according to the menu group loaded information and one display element of the content presentation form or the display location sequence of the menu group.

Specifically, the menu group display module 903 includes:
a first display unit, configured to: when the display location sequence of the menu group is a sequence arranged in parallel and from far to near in vision, display each menu group on the current interface according to the menu group loaded information in a way of the sequence arranged in parallel and from far to near in vision.

Specifically, the menu group display module 903 includes:
a second display unit, configured to: when the content presentation form of the menu group is folded pages that are placed vertically and bended continuously in vision, display each menu group on the current interface according to the menu group loaded information in a way of the folded pages that are placed vertically and bended continuously in vision in vision.

The second display unit is configured to: when each menu group includes multiple menus, make each menu correspond to one folded page in the folded pages.

Specifically, the interface message manager 902 is further configured to receive a selection instruction of the user for a menu group in the displayed multiple menu groups;
the menu controller 901 is further configured to determine whether the menu group selected according to the selection instruction is a currently activated menu group, where the currently activated menu group is a menu group that is displayed at the forefront of the current interface; and when the menu group selected according to the selection instruction is not the currently activated menu group, determine to switch the menu group selected according to the selection instruction to the currently activated menu group; and
the menu group display module 903 is further configured to: according to the display mode of the menus, switch the menu group selected according to the selection instruction to the currently activated menu group and display the menu group on the current interface.

Further, the interface message manager 902 is further configured to receive a selection instruction of the user for a menu in the currently activated menu group;
the menu controller 901 is further configured to: according to the selection instruction for the menu and received by the interface message manager 902, determine to display, on the current interface, details about the menu selected according to the selection instruction; and
the menu group display module 903 is further configured to display, on the current interface, the details about the menu selected according to the selection instruction.

Further, the interface message manager 902 is further configured to receive a return instruction of the user for a menu whose details are displayed on the current interface;
the menu controller 901 is further configured to determine to take back the details about the menu according to the return instruction received by the interface message manager 902, and display summary information of the menu on the current interface; and
the menu group display module 903 is further configured to take back the details about the menu and display the summary information of the menu on the current interface.

Specifically, the interface message manager 902 is further configured to receive latest menu picture data periodically sent by a background server;
the menu controller 901 is further configured to render and update, according to the latest menu picture data that is received by the interface message manager 902, a menu picture that is displayed on the current interface; and
the menu group display module 903 is further configured to display, on the current interface, the menu picture that is updated by the menu controller 901.

The apparatus provided by the embodiment of the present invention divides a menu system into multiple menu groups according to functional characteristic, and determines menu group loaded information; determines a display mode of each menu group in the multiple menu groups according to a location sequence in which each menu group is displayed in the menu group loaded information; and displays each menu group on a current interface according to the menu group loaded information and the display mode of each menu group. In this way, a problem in the prior art that a menu architecture is complex, unclear, and has a high requirement for a user is solved, thereby simplifying the menu architecture of a software system and making menu navigation clear and visible on a display interface, so that the user can use menus of the software system in an easier and more graphical way.

### Embodiment 4

Referring to FIG. 10, an embodiment of the present invention provides a menu showing device, where the device includes: a memory 1001, configured to store running data of functional modules;
a processor 1002, configured to be coupled with the memory 1001, where the processor is configured to execute any foregoing menu showing method; and
a transceiver 1003, configured to be coupled with the processor 1002, and receive and send various data processed by the processor.

The processor 1002 is configured to divide a menu system into multiple menu groups according to functional characteristic, and determine menu group loaded information, where the menu group loaded information includes a location sequence in which each of the menu groups is displayed; determine a display mode of each menu group in the multiple menu groups according to the location sequence in which each menu group is displayed in the menu group loaded information; and display each menu group on a current interface according to the menu group loaded information and the display mode of each menu group.

Specifically, the processor 1002 is specifically configured to: when the display mode of the menu group at least includes one display element of a content presentation form and a display location sequence of the menu group, display each menu group on the current interface according to the menu group loaded information and one display element of the content presentation form or the display location sequence of the menu group.

Further, the processor 1002 is specifically configured to: when the display location sequence of the menu group is a sequence arranged in parallel and from far to near in vision, display each menu group on the current interface according to the menu group loaded information in a way of the sequence arranged in parallel and from far to near in vision.

Further, the processor 1002 is specifically configured to: when the content presentation form of the menu group is folded pages that are placed vertically and bended continuously in vision, display each menu group on the current interface according to the menu group loaded information in a way of the folded pages that are placed vertically and bended continuously in vision in vision.

Further, the processor 1002 is configured to: when the content presentation form of the menu group is folded pages that are placed vertically and bended continuously in vision, and when each menu group includes multiple menus, make each menu correspond to one folded page in the folded pages.

Specifically, the processor 1002 is further configured to receive a selection instruction of the user for a menu group in the displayed multiple menu groups, and determine whether the menu group selected according to the selection instruction is a currently activated menu group, where the currently activated menu group is a menu group that is displayed at the forefront of the current interface; and when the menu group selected according to the selection instruction is not the currently activated menu group, switch the menu group selected according to the selection instruction to the currently activated menu group and display the menu group on the current interface.

Further, the processor 1002 is further configured to receive a selection instruction of the user for a menu in the currently activated menu group, and display, on the current interface, details about the menu selected according to the selection instruction.

Further, the processor 1002 is further configured to receive a return instruction of the user for a menu whose details are displayed on the current interface, take back the details about the menu according to the return instruction, and display summary information of the menu on the current interface.

Specifically, the processor 1002 is further configured to: after each menu group is displayed on the current interface according to the menu group loaded information and the display mode of each menu group, receive latest menu picture data periodically sent by a background server, and render and update, according to the received latest menu picture data, a menu picture that is displayed on the current interface, and display the updated menu picture on the current interface.

The device provided by the embodiment of the present invention divides a menu system into multiple menu groups according to functional characteristic, and determines menu group loaded information; determines a display mode of each menu group in the multiple menu groups according to a location sequence in which each menu group is displayed in the menu group loaded information; and displays each menu group on a current interface according to the menu group loaded information and the display mode of each menu group. In this way, a problem in the prior art that a menu architecture is complex, unclear, and has a high requirement for a user is solved, thereby simplifying the menu architecture of a software system and making menu navigation clear and visible on a display interface, so that the user can use menus of the software system in an easier and more graphical way.

A person of ordinary skill in the art may understand that all or a part of the steps of the embodiments may be implemented by hardware or a program instructing related hardware. The program may be stored in a computer-readable storage medium. The storage medium may include: a read-only memory, a magnetic disk, or an optical disc.

The foregoing descriptions are merely exemplary embodiments of the present invention, but are not intended to limit the present invention. Any modification, equivalent replacement, and improvement made without departing from the spirit and principle of the present invention shall fall within the protection scope of the present invention.

## Claims

1. A menu showing method, wherein, the method comprises:
dividing a menu system into multiple menu groups according to functional characteristic, and determining menu group loaded information, wherein the menu group loaded information comprises a location sequence in which each of the menu groups is displayed;
determining a display mode of each menu group in the multiple menu groups according to the location sequence in which each of the menu groups is displayed in the menu group loaded information; and
displaying each menu group on a current interface according to the menu group loaded information and the display mode of each menu group.

2. The method according to claim 1, wherein the display mode of the menu group at least comprises one display element of a content presentation form and a display location sequence of the menu group; and
correspondingly, the displaying each menu group on a current interface according to the menu group loaded information and the display mode of each menu group specifically comprises:
displaying each menu group on the current interface according to the menu group loaded information and one display element of the content presentation form or the display location sequence of the menu group.

3. The method according to claim 2, wherein the display location sequence of the menu group is a sequence arranged in parallel and from far to near in vision; and
correspondingly, the displaying each menu group on the current interface according to the menu group loaded information and the display location sequence specifically comprises:
displaying each menu group on the current interface according to the menu group loaded information in a way of the sequence arranged in parallel and from far to near in vision.

4. The method according to claim 2, wherein the content presentation form of the menu group is folded pages that are placed vertically and bended continuously in vision; and
correspondingly, the displaying each menu group on the current interface according to the menu group loaded information and the content presentation form of the menu group specifically comprises:
displaying each menu group on the current interface according to the menu group loaded information in a way of the folded pages that are placed vertically and bended continuously in vision.

5. The method according to any one of claims 1 to 4, wherein the method further comprises:
receiving a selection instruction of a user for a menu group in the displayed multiple menu groups;
determining whether the menu group selected according to the selection instruction is a currently activated menu group, wherein the currently activated menu group is a menu group that is displayed at the forefront of the current interface; and
when the menu group selected according to the selection instruction is not the currently activated menu group, switching the menu group selected according to the selection instruction to the currently activated menu group and displaying the menu group on the current interface.

6. The method according to any one of claims 1 to 5, wherein the method further comprises:
receiving a selection instruction of the user for a menu in the currently activated menu group; and
displaying, on the current interface, details about the menu selected according to the selection instruction.

7. The method according to any one of claims 1 to 6, wherein the method further comprises:
receiving a return instruction of the user for the menu whose details are displayed on the current interface; and
taking back the details about the menu according to the return instruction, and displaying summary information of the menu on the current interface.

8. The method according to any one of claims 1 to 7, wherein after the displaying each menu group on a current interface according to the menu group loaded information and the display mode of each menu group, the method further comprises:
receiving latest menu picture data that is periodically sent by a background server; and
rendering and updating, according to the received latest menu picture data, a menu picture that is displayed on the current interface, and displaying the updated menu picture on the current interface.

9. A menu showing apparatus, wherein the apparatus comprises:
a menu controller, configured to divide a menu system into multiple menu groups according to functional characteristic, and determine menu group loaded information, wherein the menu group loaded information comprises a location sequence in which each of the menu groups is displayed; and determine a display mode of each menu group in the multiple menu groups according to the location sequence in which each of the menu groups is displayed in the menu group loaded information;
an interface message manager, configured to obtain, on a current interface, operating instructions of a user for the menu groups divided by the menu controller and for a menu in the menu groups; and
a menu group display module, comprising the multiple menu groups divided by the menu controller, and configured to display each menu group on the current interface according to the menu group loaded information and the display mode of each menu group.

10. The apparatus according to claim 9, wherein the menu group display module is specifically configured to: when the display mode of the menu group at least comprises one display element of a content presentation form and a display location sequence of the menu group, display each menu group on the current interface according to the menu group loaded information and one display element of the content presentation form or the display location sequence of the menu group.

11. The apparatus according to claim 10, wherein the menu group display module comprises:
a first display unit, configured to: when the display location sequence of the menu group is a sequence arranged in parallel and from far to near in vision, display each menu group on the current interface according to the menu group loaded information in a way of the sequence arranged in parallel and from far to near in vision.

12. The apparatus according to claim 11, wherein the menu group display module comprises:
a second display unit, configured to: when the content presentation form of the menu group is folded pages that are placed vertically and bended continuously in vision, display each menu group on the current interface according to the menu group loaded information in a way of the folded pages that are placed vertically and bended continuously in vision in vision.

13. The apparatus according to any one of claims 9 to 12, wherein the interface message manager is further configured to receive a selection instruction of the user for a menu group in the displayed multiple menu groups;
the menu controller is further configured to determine whether the menu group selected according to the selection instruction is a currently activated menu group, wherein the currently activated menu group is a menu group that is displayed at the forefront of the current interface; and when the menu group selected according to the selection instruction is not the currently activated menu group, determine to switch the menu group selected according to the selection instruction to the currently activated menu group; and
the menu group display module is further configured to: according to the display mode of the menus, switch the menu group selected according to the selection instruction to the currently activated menu group and display the menu group on the current interface.

14. The apparatus according to any one of claims 9 to 13, wherein the interface message manager is further configured to receive a selection instruction of the user for a menu in the currently activated menu group;
the menu controller is further configured to: according to the selection instruction for the menu received by the interface message manager, determine to display, on the current interface, details about the menu selected according to the selection instruction; and
the menu group display module is further configured to display, on the current interface, the details about the menu selected according to the selection instruction.

15. The apparatus according to any one of claims 9 to 14, wherein the interface message manager is further configured to receive a return instruction of the user for the menu whose details are displayed on the current interface;
the menu controller is further configured to determine to take back the details about the menu according to the return instruction received by the interface message manager, and display summary information of the menu on the current interface; and
the menu group display module is further configured to take back the details about the menu and display the summary information of the menu on the current interface.

16. The apparatus according to any one of claims 9 to 15, wherein the interface message manager is further configured to receive latest menu picture data that is periodically sent by a background server;
the menu controller is further configured to render and update, according to the latest menu picture data that is received by the interface message manager, a menu picture that is displayed on the current interface; and
the menu group display module is further configured to display, on the current interface, the menu picture that is updated by the menu controller.

17. A menu showing device, wherein the device comprises:
a memory, configured to store running data of functional modules;
a processor, configured to be coupled with the memory, wherein the processor is configured to execute the menu showing method according to any one of claims 1 to 8; and
a transceiver, configured to be coupled with the processor, and receive and send various data processed by the processor.
